# EUROPÄISCHE PATENTANMELDUNG

(11) **EP 1 336 729 A1**
(43) Veröffentlichungstag der Anmeldung: **20.08.2003**
(21) Anmeldenummer: 02003383.3
(22) Anmeldetag: 14.02.2002
(51) Int. Cl.: F01N 3/023, B01D 41/04

(54) **Verfahren und Vorrichtung zum Entfernen von Rückständen aus dem Filterkörper des Partikelfilters der Abgasanlage eines Verbrennungsmotors**

(71) Anmelder: ZEUNA-STÄRKER GMBH & CO KG, 86154 Augsburg (DE)
(72) Erfinder: Donnert, Karl, 85221 Dachau (DE); Mayr, Andreas, 86405 Meitingen (DE)
(74) Vertreter: Grättinger & Partner (GbR)

(57) **Zusammenfassung**

Bei einem Verfahren zum Entfernen von Rückständen aus dem Filterkörper (4) des Partikelfilters (1) der Abgasanlage eines verbrennungsmotorisch angetriebenen Kraftfahrzeugs, bei welchem in einer ersten Stufe ein flüssiges Spülmittel (8) in den Partikelfilter (1) gefüllt und in einer weiteren Stufe der Filterkörper (4) entgegen seiner Filterrichtung von einem gasförmigen Spülmedium durchströmt wird, ruht das flüssige Spülmittel (8), nachdem der Partikelfilter (1) mit ihm aufgefüllt worden ist, ein vorgegebenes Zeitintervall. Nach Ablauf des vorgegebenen Zeitintervalls setzt schlagartig die Zufuhr des gasförmigen Spülmediums ein. Die zur Durchführung dieses Verfahrens geeignete Vorrichtung umfaßt einen Spülmittelbehälter (7), eine Quelle (15) für ein gasförmiges Spülmedium, eine Halterung für den zu reinigenden Partikelfilter (1) und eine Auffangeinrichtung (20) für den Partikelfilter (1) verlassendes flüssiges Spülmittel (8). Dabei ist der Zuströmseite des Partikelfilters eine erste Absperreinrichtung (29) und der Quelle (15) für das gasförmige Spülmedium eine zweite Absperreinrichtung (16) zugeordnet.

## Beschreibung

Die vorliegende Erfindung betrifft ein Verfahren zum Entfernen von Rückständen aus dem Filterkörper des Partikelfilters der Abgasanlage eines verbrennungsmotorisch angetriebenen Kraftfahrzeugs, bei welchen in einer ersten Stufe ein flüssiges Spülmittel in den Partikelfilter gefüllt und in einer weiteren Stufe der Filterkörper entgegen seiner Filterrichtung von einem gasförmigen Spülmedium durchströmt wird. Desweiteren betrifft die vorliegende Erfindung eine zur Durchführung des vorstehend genannten Verfahrens geeignete Vorrichtung, umfassend einen Spülmittelbehälter, eine Quelle für ein gasförmiges Spülmedium, eine Halterung für den zu reinigenden Partikelfilter und eine Auffangeinrichtung für den Partikelfilter verlassendes flüssiges Spülmittel.

Mit Dieselmotoren angetriebene Kraftfahrzeuge werden zunehmend mit Partikelfiltern ausgerüstet, die verhindern sollen, daß in den Motorabgasen enthaltene partikelförmige Bestandteile, insbesondere Ruß, in die Umwelt gelangen. Derartige Partikelfilter umfassen regelmäßig mindestens einen in einem Gehäuse untergebrachten Filterkörper, der im allgemeinen aus einem porösen keramischen Material besteht. An der Oberfläche des Filterkörpers schlagen sich die abzuscheidenden Partikel nieder. Die Filterkörper müssen dabei, um funktionsfähig zu bleiben, regelmäßig regeneriert werden.

Die Regeneration erfolgt dabei in aller Regel durch Abbrennen der auf der Filteroberfläche abgelagerten Partikel (vgl. z.B. US-A 5042248, DE 4041917 A1, EP 0115722 A1, US-A 5211009, EP 0346803 A1 und EP 0405310 A2). Vorgeschlagen wurde des weiteren, den auf dem Filterkörper abgelagerten Ruß regelmäßig durch Umkehrspülung in eine gesonderte Brennkammer zu fördern, wo er bei Bedarf abgebrannt wird (vgl. US-A 5390492); allerdings ist nicht bekannt, daß der zuletzt genannte Ansatz zu brauchbaren Ergebnissen geführt hat.

Um den auf dem Filterkörper angelagerten Ruß zur Regeneration des Filterkörpers auch bei üblichen Abgastemperaturen abbrennen zu können, ohne die Abgase durch einen Brenner aufheizen zu müssen, werden dem Dieselkraftstoff Additive zugesetzt. Die Rückstände dieser Additive werden allerdings bei der Regeneration des Filterkörpers nicht entfernt. Vielmehr lagern sie sich fortgesetzt auf der Oberfläche des Filterkörpers an; entsprechendes gilt für verschiedene Rückstände aus Schmierölbestandteilen. Derartige Ablagerungen beeinträchtigen die Reinigungskapazität des Partikelfilters, so daß die Abstände zwischen zwei Regenerationen zunehmend kürzer werden. Ohne eine die genannten Ablagerungen entfernende Reinigung wäre ein Filterkörper nach etwa 30.000 bis 50.000 km Fahrleistung nicht mehr oder zumindest nur noch eingeschränkt funktionstüchtig.

Um die Rückstände der Additive und sonstige unbrennbare Ablagerungen von dem Filterkörper zu entfernen, wird in der EP 1060780 A1 das eingangs angegebene Verfahren zum Entfernen von Rückständen aus dem Filterkörper eines Partikelfilters vorgeschlagen. Dabei wird der Filterkörper einer Umkehrspülung mit einem geeigneten, unter Druck gesetzten flüssigen Spülmittel unterzogen; anschließend wird der Filterkörper mit einem ebenfalls unter Druck gesetzten gasförmigen Spülmedium durchströmt.

Gemäß der DE 19959955 A1, die sich mit demselben Problem befaßt, sollen die nicht brennbaren Rückstände mittels einer Umkehrspülung mit einem gasförmigen Spülmedium aus dem Partikelfilter ausgetragen werden. Hierzu weist das Gehäuse des Partikelfilters zu beiden Seiten des Filterkörpers Zugangsöffnungen auf, durch welche ein geeignetes gasförmiges Spülmedium dem Filterkörper auf der einen Seite zugeführt und auf der anderen Seite wieder entzogen wird.

Nachteilig bei dem aus der EP 1060780 A1 bekannten gattungsgemäßen Verfahren ist insbesondere die große Menge des anfallenden flüssigen Spülmittels, das mit einem erheblichen technischen bzw. finanziellen Aufwand aufbereitet und/oder entsorgt werden muß. Und mit dem Verfahren gemäß der DE 19959955 A1 lassen sich die weiter oben erläuterten Rückstände nur teilweise entfernen.

Aufbauend auf dem vorstehend dargelegten Stand der Technik liegt der vorliegenden Erfindung die Aufgabe zugrunde, ein Verfahren der eingangs angegebenen Art zu schaffen, das sich bei einer vergleichsweise geringen Menge anfallenden flüssigen Spülmittels durch eine ausreichend wirkungsvolle Reinigung des Filterkörpers auszeichnet, ohne daß hierzu ein besonderer baulicher Aufwand bei der Herstellung der Abgasreinigungsvorrichtung oder ein unverhältnismäßig hoher Aufwand bei der Durchführung des Reinigungsverfahrens erforderlich wäre.

Gelöst wird diese Aufgabe gemäß der vorliegenden Erfindung durch das in Anspruch 1 angegebenen Verfahren. Eine erfindungsgemäße, zur Durchführung dieses Verfahrens geeignete Vorrichtung ist in Anspruch 12 angegeben. Von wesentlicher Bedeutung für die Lösung der vorstehend angegebenen Aufgabenstellung gemäß der vorliegenden Erfindung ist somit die Kombination zweier unmittelbar den Einsatz des flüssigen Spülmittels betreffender Merkmale. Zum einen durchströmt, anders als dies nach dem Stand der Technik bisher vorgeschagen wurde, das flüssige Spülmittel nicht kontinuierlich im Sinne einer Umkehrspülung den Filterkörper entgegen seiner Filterrichtung; vielmehr ruht das flüssige Spülmittel, nachdem der Partikelfilter mit ihm befüllt wurde, ein vorgegebenes Zeitintervall lang. Und zum anderen wird jene Phase, in welcher sich die von dem Filterkörper zu entfernenden Rückstände in dem ruhenden flüssigen Spülmittel von der Oberfläche des Filterkörpers ablösen, abrupt dadurch beendet, daß nach Ablauf des vorgegebenen Zeitintervalls schlagartig die Zufuhr des gasförmigen Spülmediums, durch welches das flüssige Spülmittel mitsamt der in ihm gelösten Rückstände aus dem Partikelfilter herausgepreßt wird, einsetzt. Eine solche "Stoßentladung", die bei durchschnittlichen Verhältnissen bei einem Druck von ca. 3 bar erfolgen kann, führt in Verbindung mit der vorausgegangenen ersten Phase des Verfahrens zu einer besonders effizienten Reinigung des Partikelfilters. Bei einem Reinigungszyklus, der in aller Regel bereits zu einer ausreichenden Reinigung des Filterkörpers von unbrennbaren Rückständen führt, fällt somit erkennbar im wesentlichen allein eine Menge an zu entsorgendem bzw. aufzubereitendem flüssigem Spülmittel an, die dem Volumen des Partikelfilters entspricht. Dies führt zu bisher nicht erzielbaren geringen Kosten für das Entfernen von Rückständen aus Partikelfiltern.

Besonders hervorzuheben ist im übrigen sowohl in wirtschaftlicher Hinsicht als auch unter Gesichtspunkten des Umweltschutzes, daß im Rahmen des erfindungsgemäßen Verfahrens als flüssiges Spülmittel Wasser ohne jeglichen Zusatz von Tensiden oder sonstigen Reinigungsmitteln Verwendung finden kann, ohne daß dies zu einer nennenswerten Beeinträchtigung der Reinigungswirkung führen würde. Namentlich gilt dies in dem Falle, daß das als flüssiges Spülmittel verwendete Wasser, bevor der Partikelfilter mit ihm befüllt wird, gegenüber den Umgebungsbedingungen angewärmt wird, und zwar bevorzugt auf eine Temperatur zwischen 75°C und 90°C, besonders bevorzugt auf 80°C bis 85°C. In diesem Zusammenhang kommt nochmals der vorstehend erläuterte, besonders geringe Bedarf an flüssigem Spülmittel zum Tragen; denn dieser wirkt sich unmittelbar im Sinne eines entsprechend geringen Energiebedarfs für das Erwärmen des flüssigen Spülmittels und somit geringen Verfahrenskosten aus.

Namentlich dann, wenn im Rahmen der ersten Stufe des Verfahrens ein angewärmtes flüssiges Spülmittel zum Einsatz kommt, ist die für die Durchführung des erfindungsgemäßen Verfahrens erforderliche Zeit überraschend gering; so genügen bei durchschnittlichen Verhältnissen für das vorgegebene Zeitintervall, in dem das flüssige Spülmittel ruht, zwischen 3 und 8 Minuten, beispielsweise 5 bis 6 Minuten. Die hierdurch mögliche kurze Verfahrensdauer wirkt sich wiederum unmittelbar im Sinne von niedrigen Kosten für das Reinigen des Partikelfilters aus.

Gemäß einer bevorzugten Weiterbildung des erfindungsgemäßen Verfahrens ist vorgesehen, daß der Partikelfilter von der Abströmseite her mit dem flüssigen Spülmittel befüllt wird. Dies trägt zu einem besonders guten Reinigungsergebnis bei, indem nur vergleichsweise lose an der Oberfläche des Filterkörpers anhaftende Rückstände gleich beim Befüllen des Partikelfilters mit dem flüssigen Spülmittel von der Oberfläche des Filterkörpers entfernt und aus diesem ausgetragen werden.

Ebenfalls im Hinblick auf ein besonders gutes Reinigungsergebnis hat es sich als günstig erwiesen, wenn der Partikelfilter gemäß einer weiteren bevorzugten Weiterbildung der Erfindung zumindest während des vorgegebenen Zeitintervalls, in welchem das flüssige Spülmittel ruht, aufrecht mit der Zuströmseite nach unten angeordnet ist. Auf diese Weise wird das Austragen von Rückständen, die sich während dieser Phase des Reinigungsverfahrens von der Oberfläche des Filterkörpers ablösen, unterstützt, indem die betreffenden abgelösten Rückstände in dem Spülwasser absinken.

Im Rahmen der vorliegenden Erfindung kann das flüssige Spülmittel während des vorgegebenen Zeitintervalls, während dessen es ruht, von einem Rüttler beaufschlagt werden. Ein solcher Rüttler kann innerhalb des ruhenden Spülmittels Druckschwankungen erzeugen, welche begünstigen, daß sich die von dem Filterkörper zu entfernenden Rückstände von dessen Oberfläche lösen. Besonders günstig ist es dabei, wenn sich die Frequenz der von dem Rüttler erzeugten Schwingungen über die Zeit ändert.

Als gasförmiges Spülmedium kommt im Rahmen der vorliegenden Erfindung insbesondere Luft in Betracht. In diesem Falle sind die mit der Durchführung des erfindungsgemäßen Verfahrens verbundenen Kosten besonders niedrig.

Im übrigen ist es besonders günstig, wenn das gasförmige Spülmedium gegenüber den Umgebungsbedingungen erwärmt wird. Auf diese Weise läßt sich das Trocknen des Filterkörpers sowie der im allgemeinen zu dessen Lagerung in dem Gehäuse des Partikelfilters vorgesehenen Lagerungsmatte beschleunigen und der für die Durchführung des erfindungsgemäßen Verfahrens benötigte Zeitaufwand verkürzen.

Zur Durchführung des erfindungsgemäßen Verfahrens eignet sich in besonderer Weise eine Vorrichtung, die zusätzlich zu einem Spülmittelbehälter, einer Quelle für ein gasförmiges Spülmedium, einer Halterung für den zu reinigenden Partikelfilter und einer Auffangeinrichtung für den Partikelfilter verlassendes flüssiges Spülmittel eine erste, der Zuströmseite des Partikelfilters zugeordnete Absperreinrichtung und eine zweite, der Quelle für das gasförmige Spülmedium zugeordnete Absperreinrichtung umfaßt. Beide Absperreinrichtungen sind dabei geschlossen, während der Partikelfilter mit dem flüssigen Spülmittel befüllt wird und während das flüssige Spülmittel in dem Partikelfilter ruht. Am Ende jener Phase wird die zweite Absperreinrichtung schlagartig geöffnet, wodurch schlagartig die Zufuhr des gasförmigen Spülmediums zu dem Filterkörper einsetzt. Je nach der konstruktiven Bauweise der ersten Absperreinrichtung wird diese entweder aktiv geöffnet, oder aber sie öffnet sich selbsttätig bei Beginn der Zufuhr des gasförmigen Spülmediums zu dem Partikelfilter.

Die erste Absperreinrichtung kann gemäß einer bevorzugten Weiterbildung der Erfindung als hydraulische Absperreinrichtung in Form eines Syphons ausgeführt sein. In diesem Falle ergibt sich für die Vorrichtung ein besonders geringer apparativer und steuerungstechnischer Aufwand. Besonders günstig ist es dabei, wenn der Syphon an seinem tiefsten Punkt eine verschließbare Ablaßöffnung aufweist. An dieser lassen sich Rückstände, welche sich in der ersten Phase des Reinigungsverfahrens von der Oberfläche des Filterkörpers gelöst haben und in dem ruhenden Spülmittel abgesunken sind, konzentriert entfernen.

Eine andere bevorzugte Weiterbildung der erfindungsgemäßen Vorrichtung zeichnet sich dadurch aus, daß eine dritte, dem Spülmittelbehälter zugeordnete Absperreinrichtung vorgesehen ist. Diese wird nach dem Befüllen des Partikelfilters mit flüssigem Spülmittel, spätestens kurz vor dem Ende der ersten Phase des Reinigungsverfahrens geschlossen, um zu verhindern, daß gasförmiges Spülmedium in den Spülmittelbehälter eindringt.

Im folgenden wird die vorliegende Erfindung anhand zweier in der Zeichnung veranschaulichter Ausführungsbeispiele näher erläutert. Dabei zeigt
- Fig.1: eine erste Ausführungsform der zur Durchführung des erfindungsgemäßen Verfahrens geeigneten Vorrichtung und
- Fig. 2: eine zweite Ausführungsform der zur Durchführung des erfindungsgemäßen Verfahrens geeigneten Vorrichtung.

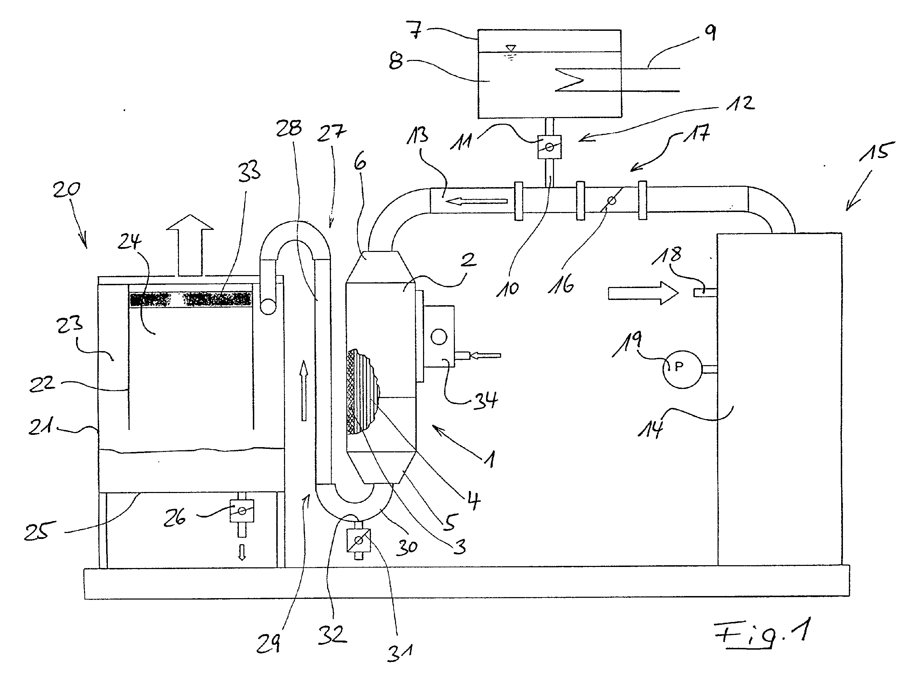

Der zu reinigende Partikelfilter 1 umfaßt in als solches bekannter Weise ein Gehäuse 2, in dem - unter Zwischenschaltung einer Lagerungsmatte 3 - ein monolithischer, wabenförmig strukturierter Filterkörper 4 gelagert ist. Das Gehäuse 2 des Partikelfilters 1 weist einen zuströmseitigen Eingangstrichter 5 und einen abströmseitigen Ausgangstrichter 6 auf. Mittels einer - nicht dargestellten - Halterung ist der Partikelfilter 1 während seiner Reinigung in der in Fig. 1 veranschaulichten Vorrichtung dergestalt in einer aufrechten Stellung fixiert, daß die Zuströmseite nach unten weist.

In einem Spülmittelbehälter 7 ist flüssiges Spülmittel 8 in Form von Wasser aufgenommen. Zur Erwärmung des Spülmittels 8 ist einen Wärmetauscher 9 vorgesehen. Der Spülmittelbehälter 7 ist über ein Leitungsstück 10, in welches eine als steuerbares Ventil 11 ausgeführte Absperreinrichtung 12 integriert ist, an eine Spülleitung 13 angeschlossen. Die Spülleitung 13 ist ihrerseits dichtend an den Ausgangstrichter 6 des zu reinigenden Partikelfilters 1 angeschlossen.

Desweiteren ist an die Spülleitung 13 eine als Druckluftbehälter 14 ausgeführte Quelle 15 für ein gasförmiges Spülmedium angeschlossen, und zwar über die als steuerbares Ventil 16 ausgeführte Absperreinrichtung 17. Der Druckluftbehälter 14 wird über den Stutzen 18 mit Druckluft gespeist, wobei der in dem Druckluftbehälter 14 herrschende Druck unter Verwertung eines von dem Drucksensor 19 bereitgestellten Drucksignals auf einen vorgegebenen Wert geregelt wird.

Ferner umfaßt die in Fig. 1 veranschaulichte Vorrichtung eine Auffangeinrichtung 20 für den Partikelfilter 1 verlassendes flüssiges Spülmittel. Die Auffangeinrichtung 20 ist ausgeführt als ein Behälter 21, der in seinem oberen Abschnitt mittels eines Ringblechs 22 in einen ringförmigen äußeren Bereich 23 und einen inneren Bereich 24 unterteilt ist. An den Boden 25 des Behälters 21 ist ein Ablaßventil 26 angeschlossen.

Das Gehäuse 2 des Partikelfilters 1 steht über ein einen Syphon 27 bildendes Rohrstück 28 mit dem Behälter 21 in Verbindung. Das Rohrstück 28, welches dichtend an den Eingangstrichter 5 des Gehäuses 2 des Partikelfilters 1 angeschlossen ist, mündet dabei in den ringförmigen äußeren Bereich 23 des Behälters 21. Durch seine Ausführungen als Syphon 27 bildet das Rohrstück 28, wie sich weiter unten im Detail ergibt, eine hydraulische Absperreinrichtung 29 für das in den Partikelfilter 1 eingefüllte flüssige Spülmittel. Am unteren Rohrbogen 30 des Rohrstücks 28 ist am tiefsten Punkt eine mittels eines Ventils 31 verschließbare Ablaßöffnung 32 angeordnet. Der innere Bereich 24 des Behälters 21 mündet über ein Filterelement 33 ins Freie.

An das Gehäuse 2 des zu reinigenden Partikelfilters 1 ist ein Rüttler 34 angesetzt, mit welchem sich das in den Partikelfilter eingefüllte flüssige Spülmittel in hochfrequente Schwingungen versetzen läßt.

Zur Durchführung des erfindungsgemäßen Verfahrens wird die in Fig. 1 veranschaulichte Vorrichtung wie folgt eingesetzt: Bei geschlossenen Ventilen 16 und 31 wird das dem Spülmittelbehälter 7 zugeordnete Ventil 11 geöffnet. Hierdurch strömt als Spülmittel 8 verwendetes Wasser, welches mittels des Wärmetauschers 9 auf eine Temperatur von ca. 85°C vorgeheizt worden ist, durch das Leitungsstück 10 und die Spülleitung 13 von der Abströmseite des Partikelfilters 1 her in dessen Gehäuse 2. Das Spülmittel 8 dringt durch den Filterkörper 4 hindurch und sammelt sich zunächst in dem unteren Rohrbogen 30 des Rohrstücks 28. Nach und nach steigt der Flüssigkeitsspiegel in dem Rohrstück 28 und dem Gehäuse 2 des Partikelfilters 1 an, bis letzterer vollständig geflutet ist. Das Füllen des Partikelfilters 1 mit Spülflüssigkeit erfolgt dabei ausschließlich aufgrund des hydrostatischen Gefälles; irgendwelche zusätzlichen Aggregate, um die Spülflüssigkeit unter Druck zu setzen, sind nicht erforderlich und werden nicht eingesetzt.

Nun werden das Ventil 11 geschlossen und der Rüttler 34 in Betrieb genommen. Nach einer Einwirkzeit von fünf Minuten wird das Ventil 16 geöffnet. Hindurch strömt Druckluft, welche in dem Druckluftbehälter 14 bei einem Druck von 3 bar gespeichert ist, schlagartig über die Spülleitung 13 in das Gehäuse 2 des Partikelfilters 1 ein und treibt aus diesem im Sinne einer Stoßentladung schlagartig die in ihm befindliche Spülflüssigkeit aus. Die aus in dem Partikelfilter 1 ausgetriebene Spülflüssigkeit gelangt über das Rohrstück 28 in den Behälter 21. Das Ringblech 22 dient dabei als Abscheider, indem es die Flüssigkeitsanteile und die Spülluft weitgehend separiert. Die aus dem Partikelfilter 1 ausgetriebene Spülflüssigkeit sammelt sich unten in dem Behälter 21. Die Spülluft verläßt den Behälter 21 durch dessen inneren Bereich 24, wobei in der Spülluft mitgerissene Flüssigkeitströpfchen in dem Filterelement 33 abgeschieden werden.

Das Ventil 16 bleibt dabei über den für das Austreiben der Spülflüssigkeit aus dem Partikelfilter 1 benötigten Zeitraum hinaus geöffnet, um eine beschleunigte Trocknung des Filterkörpers 4 und der Lagerungsmatte 3 zu bewirken.

Lösen sich in der ersten Phase des Reinigungsvorgangs auf der Oberfläche des Filterkörpers 4 abgelagerte Rückstände in einem hohen Maße und sammeln sich die abgelösten, in der Spülflüssigkeit absinkenden Rückstände unten in dem unteren Rohrbogen 30 des Rohrstücks 28 an, so ist es zweckmäßig, vor dem Öffnen des Ventils 16 kurzzeitig das Ventil 31 zu öffnen, um die im Bereich der Ablaßöffnung 32 angesammelten Rückstände konzentriert abzuziehen. In diesem Falle weist die am Ende des Reinigungsverfahrens in dem Behälter 21 aufgefangene Spülflüssigkeit nur eine vergleichsweise geringe Konzentration an Rückständen auf, was sich günstig auf die Entsorgungskosten auswirkt.

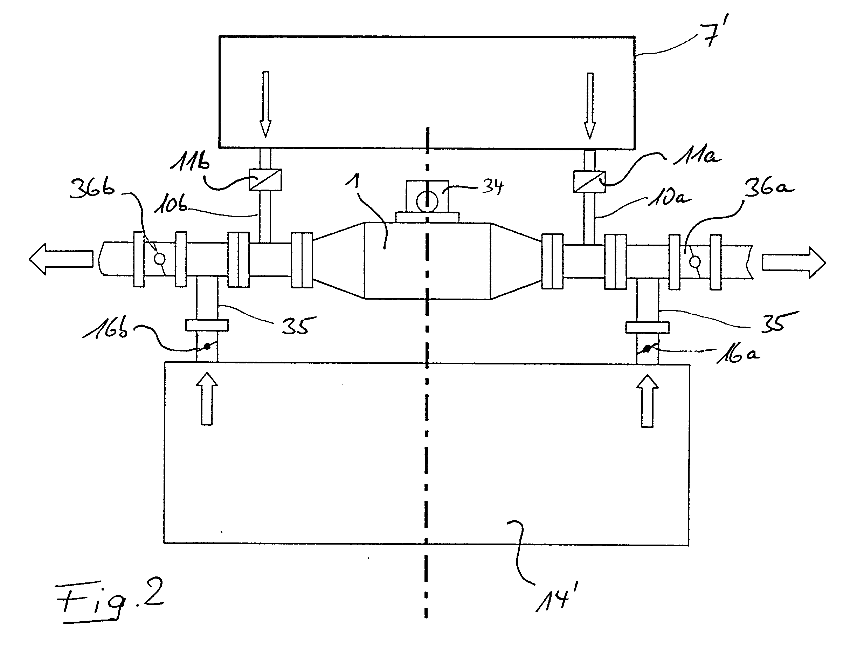

Die in Fig. 2 veranschaulichte Vorrichtung gestattet, den Partikelfilter 1 von beiden Seiten her mit flüssigem Spülmittel zu befüllen und das in dem Partikelfilter 1 stehende flüssige Spülmittel 8 in beiden Richtungen aus dem Gehäuse 2 des Partikelfilters herauszupressen. Hierzu ist sowohl der Spülmittelbehälter 7' als auch der Druckluftspeicher 14' über jeweils zwei Verbindungsleitungen 10' bzw. 35 sowohl an die Zuströmseite wie auch an die Abströmseite des Partikelfilters 1 angeschlossen. In einem ersten Reinigungszyklus wird der Partikelfilter 1 bei geöffnetem Absperrventil 36b, geschlossenem Absperrventil 36a, geschlossenen Ventilen 16a und 16b und geschlossenem Wasserzulaufventil 11b über das geöffnete Wasserzulaufventil 11a geflutet. Ist der Partikelfilter 1 vollständig mit flüssigem Spülmittel gefüllt, werden das Wasserzulaufventil 11a und das Absperrventil 36b geschlossen und der Rüttler 34 in Betrieb genommen. Nach Ablauf eines vorgegebenen Zeitintervalls, während dessen das flüssige Spülmittel in dem Partikelfilter 1 ruht, werden kurz nacheinander das Absperrventil 36b und das Druckluftventil 16a geöffnet, wodurch das in dem Partikelfilter 1 stehende flüssige Spülmittel schlagartig aus diesem herausgepreßt wird. Anschließend erfolgt ein zweiter Reinigungszyklus mit umgekehrter Spülrichtung, indem jeweils die spiegelbildlichen Ventile im Sinne des vorstehend dargelegten Verfahrensablaufs betätigt werden.

## Patentansprüche

1. Verfahren zum Entfernen von Rückständen aus dem Filterkörper (4) des Partikelfilters (1) der Abgasanlage eines verbrennungsmotorisch angetriebenen Kraftfahrzeugs, bei welchem in einer ersten Stufe ein flüssiges Spülmittel (8) in den Partikelfilter (1) gefüllt und in einer weiteren Stufe der Filterkörper (4) entgegen seiner Filterrichtung von einem gasförmigen Spülmedium durchströmt wird,
**dadurch gekennzeichnet,**
**daß** das flüssige Spülmittel (8), nachdem der Partikelfilter (1) mit ihm aufgefüllt worden ist, ein vorgegebenes Zeitintervall ruht und daß nach Ablauf des vorgegebenen Zeitintervalls schlagartig die Zufuhr des gasförmigen Spülmediums einsetzt.

2. Verfahren nach Anspruch 1,
**dadurch gekennzeichnet,**
**daß** das vorgegebene Zeitintervall, in dem das flüssige Spülmittel (8) ruht, zwischen 3 Minuten und 8 Minuten beträgt.

3. Verfahren nach Anspruch 1 oder Anspruch 2,
**dadurch gekennzeichnet,**
**daß** als flüssiges Spülmittel (8) Wasser verwendet wird.

4. Verfahren nach Anspruch 3,
**dadurch gekennzeichnet,**
**daß** Wasser ohne Zusatz von Tensiden oder sonstigen Reinigungsmitteln verwendet wird.

5. Verfahren nach Anspruch 3 oder Anspruch 4,
**dadurch gekennzeichnet,**
**daß** das Wasser gegenüber den Umgebungsbedingungen angewärmt wird.

6. Verfahren nach Anspruch 5,
**dadurch gekennzeichnet,**
**daß** die Temperatur des Wassers beim Einfüllen in den Partikelfilter (1) zwischen 75°C und 90°C beträgt.

7. Verfahren nach einem der Ansprüche 1 bis 6,
**dadurch gekennzeichnet,**
**daß** der Partikelfilter (1) von der Abströmseite her mit dem flüssigen Spülmittel (8) befüllt wird.

8. Verfahren nach einem der Ansprüche 1 bis 7,
**dadurch gekennzeichnet,**
**daß** der Partikelfilter (1) zumindest während des vorgegebenen Zeitintervalls, in welchem das flüssige Spülmittel (8) ruht, aufrecht mit der Zuströmseite nach unten angeordnet ist.

9. Verfahren nach einem der Ansprüche 1 bis 8,
**dadurch gekennzeichnet,**
**daß** das flüssige Spülmittel (8) während des vorgegebenen Zeitintervalls von einem Rüttler (34) beaufschlagt wird.

10. Verfahren nach einem der Ansprüche 1 bis 9,
**dadurch gekennzeichnet,**
**daß** als gasförmiges Spülmedium Luft verwendet wird.

11. Verfahren nach einem der Ansprüche 1 bis 10,
**dadurch gekennzeichnet,**
**daß** das gasförmige Spülmedium gegenüber den Umgebungsbedingungen angewärmt wird.

12. Vorrichtung zur Durchführung des Verfahrens nach Anspruch 1, umfassend einen Spülmittelbehälter (7), eine Quelle (15) für ein gasförmiges Spülmedium, eine Halterung für den zu reinigenden Partikelfilter (1) und eine Auffangeinrichtung (20) für den Partikelfilter (1) verlassendes flüssiges Spülmittel (8), **gekennzeichnet durch** eine erste, der Zuströmseite des Partikelfilters zugeordnete Absperreinrichtung (29) und eine zweite, der Quelle (15) für das gasförmige Spülmedium zugeordnete Absperreinrichtung (16).

13. Vorrichtung nach Anspruch 12,
**dadurch gekennzeichnet,**
**daß** die erste Absperreinrichtung (29) als hydraulische Absperreinrichtung in Form eines Syphons (27) ausgeführt ist.

14. Vorrichtung nach Anspruch 13,
**dadurch gekennzeichnet,**
**daß** der Syphon (27) an seinem tiefsten Punkt eine verschließbare Ablaßöffnung (32) aufweist.

15. Vorrichtung nach einem der Ansprüche 12 bis 14,
**dadurch gekennzeichnet,**
**daß** eine dritte, dem Spülmittelbehälter (7) zugeordnete Absperreinrichtung (12) vorgesehen ist.
